**Europäisches Patentamt**

**European Patent Office**

**Office européen des brevets**

(11) Publication number : **0 366 218 B1**

(12) **EUROPEAN PATENT SPECIFICATION**

(45) Date of publication of patent specification :
29.04.92 Bulletin 92/18

(51) Int. Cl.⁵ : **B23K 9/04**

(21) Application number : **89301879.6**

(22) Date of filing : **24.02.89**

(54) **Automatic build up welding apparatus.**

(30) Priority : **25.10.88 JP 268886/88**

(43) Date of publication of application :
**02.05.90 Bulletin 90/18**

(45) Publication of the grant of the patent :
**29.04.92 Bulletin 92/18**

(84) Designated Contracting States :
**DE FR GB IT**

(56) References cited :
**DD-A- 237 130**
**DE-A- 3 226 418**

(73) Proprietor : **Maruma Jyusharyo Kabushiki Kaisha**
**2-19 Sakuragaoka, 1-chome**
**Setagaya-ku Tokyo (JP)**

(72) Inventor : **Moriki, Yasumitsu**
**3-11-4 Sakura Setagaya-ku**
**Tokyo (JP)**

(74) Representative : **Smith, Philip Antony et al**
**REDDIE & GROSE 16 Theobalds Road**
**London WC1X 8PL (GB)**

## Description

This invention relates to a build-up welding machine used when the surface of a track roller in contact with a belt is worn, which can automatically adjust, in the case where a tapered section of a roller groove is asymmetrical in left and right sides, a welding width according to a welding surface to build-up weld only the required width.

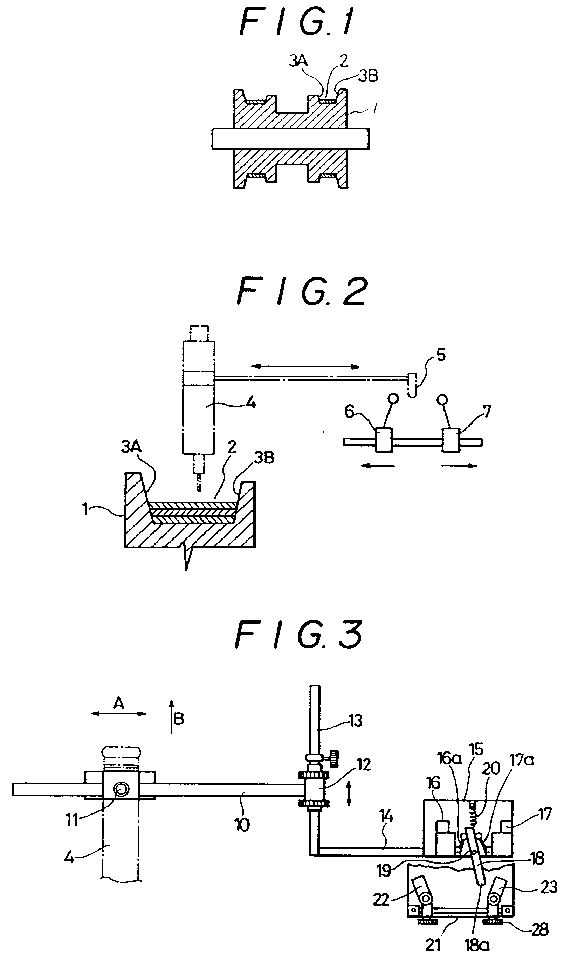

A typical section of track roller 1 is as shown in Figure 1. The angle of inclination of the side walls 3A and 3B of a roller groove 2 is often different.

Since a build-up layer generally comprises a plurality of layers, the lateral reciprocation of a torch 1 has to be widened by a distance different for the two ends towards the upper layer.

In the past, a pair of position-adjustable limit switches 6 and 7 are actuated by an actuator 5 operatively associated with lateral motion of the torch by means shown in Figure 2 in addition to mechanical means such as a cam, a crank and the like, and a position of each of the limit switches is manually varied every welding layer.

This requires an operator in charge during the welding work, which is uneconomical.

It is an object of the present invention to provide a full automatic build-up welding machine which requires no operator in charge during the entire step till a required build-up is obtained in the oscillation welding, in which even in the case where the angle of inclination of walls of a roller groove is different and a turn-position of a torch is different in each layer, the torch can be automatically reversed at a proper position to obtain a uniform build-up surface every layer.

The present apparatus comprises a switch box housing therein a pair of switches which are mounted adjustably in position with respect to a torch which moves in a zigzag fashion over the width of a surface to be built-up, i.e., between inclined walls opposed to a roller, an actuating swing lever provided between said pair of switches, and a pair of guides fixedly mounted on the body of a welding machine and set to the angle of inclination of said inclined walls and a spacing between walls, whereby the width of motion of the torch is automatically varied according to the width required for welding to effect build-up welding.

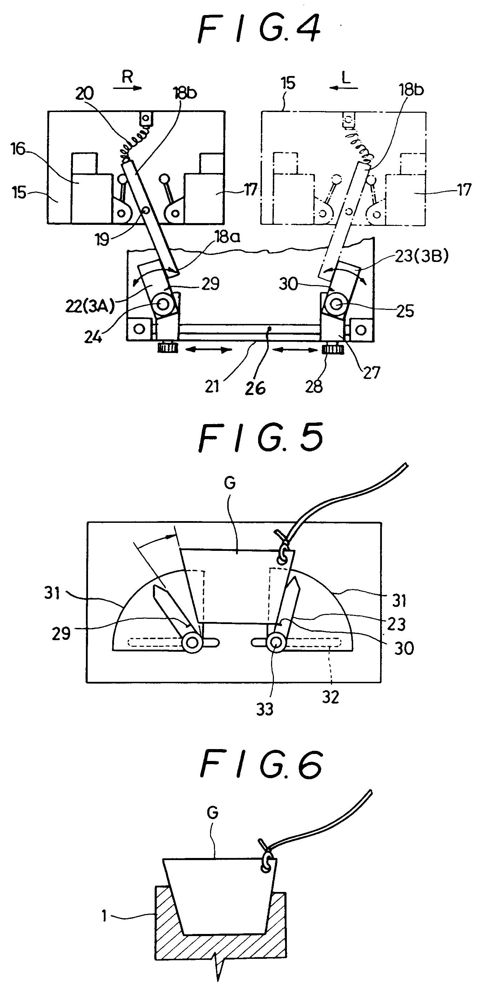

In the present invention, the pair of guides can be adjusted in position in left and right directions, respectively, and the adjustment of angle can be continuously carried out. Since the shape of the roller groove is defined by the makers and according to the kind of machines, the setting of the guides can be simply adjusted by preparing a few gauge plates G as shown in FIG. 6 adjusted to the section of the roller groove.

Fig. 1 is a sectional view showing a build-up weld portion in a track roller;

Fig. 2 is an explanatory view of a conventional device;

Fig. 3 is a front view of essential parts of apparatus according to the present invention;

Fig. 4 is a front view showing the relationship between an actuating lever and a collision device;

Fig. 5 is a front views of another embodiment of the collision device; and

Fig. 6 is a front view showing a gauge plate and a roller groove.

The present apparatus will be described hereinafter with reference to the drawings.

A torch 4 reciprocates in a zigzag fashion, as shown in FIG.3, with respect to the overall width of a surface to be welded. On the other hand, a roller 1, which is a welding object, is step-driven by a required angle and moves around. The torch moves upward (as indicated by the arrow B) through a thickness of a welding layer every completion of welding each layer. Their driving devices are similar to those of prior art and therefore not shown in the drawings.

Reference numeral 10 designates a mounting rod mounted on the torch and can be adjusted in lateral position by a mounting screw 11.

Reference numeral 12 designates a height-position fine-adjusting device secured to the end of the mounting rod, and is fitted in a vertical rod 13.

Reference numeral 14 designates a connecting rod secured to the lower end of the rod and supports a switch box 15.

Reference numerals 16 and 17 designate limit switches, which are fixed so that actuators 16a and 17a thereof are face to each other.

Reference numeral 18 designates a swing lever having fulcrum 19, and an upper end 18b thereof comes into abutment with the actuator of the limit switch.

Reference numeral 20 designates an element for defining a free movement of the swing lever, and the element can be omitted.

Reference numeral 21 designates a lever collision device provided with a pair of guides 22 and 23 whose angle can be varied.

Reference numerals 24 and 25 designate angle adjusting screws, respectively. The guide 23 is provided on a holder 27 which slidably moves along a rod 26 and a position thereof is defined by a set screw 28.

Reference numerals 29 and 30 designate marks, respectively, for adjusting a height and a position of a start point of welding.

In the use of the present apparatus, angles of the guides 22 and 23 of the lever collision device are set while being adjusted to angle of both side walls of a build-up surface of a member to build-up welded, and the spacing therebetween is made in coincidence with the distance between the side walls.

Next, the tip of the torch is moved to a welding start point on one side, at which position the lever tip 18a of the switch box comes into abutment with the corresponding guide to actuate the limit switch. The torch is driven and the oscillation welding starts. The torch is moved in a direction as indicated by the arrow R in FIG. 4, for example.

When the tip 18a of the lever comes into abutment with the guide 23, the upper end 18b of the lever 18 presses the actuator 17a of the switch 17 whereby the driving direction of the torch is reversed to cause the torch to be moved in a direction as indicated by the arrow L.

When the torch is repeatedly moved in a zigzag fashion and the roller 1 is rotated once, the torch 4 and the switch box 17 are moved upward through a welding thickness.

Thereby, the point of the lever tip 18a in abutment with the guides 22 and 23, that is, the reciprocating distance is extended.

In the present invention, the shape of the actuating lever 18 can be suitably selected. It is noted that in the collision device, an angle graduation plate 31 is mounted on the guides 22 and 23 as shown in FIG.5, and one of them is fitted into a slide groove 32 to allow an angle adjusting screw 33 serve as the position adjusting screw 28.

According to the present invention, a welded layer having a required thickness is automatically obtained every layer, and therefore, manual operation by an operator in charge is not at all required, and in addition, even if the angle of inclination of both side walls is different in any way, a proper welding width may be obtained every welded layer, and therefore, a uniform build-up layer can be obtained.

**Claims**

1. Automatic build-up welding apparatus comprising a fixed collision device (21) with a pair of guides (22, 23) settable to correspond in spacing and inclination with the sides of a groove (2) to be built up, a switch box (15) coupled to the welding torch (4) of the apparatus for lateral and vertical movement, the switch box (15) having limit switches (16, 17) for reversing the lateral movement of the torch (4) and a swing lever (18) for actuation of the limit switches (16, 17) when the lever engages the guides (22, 23).

2. Apparatus as claimed in claim 1 in which the guides (22, 23) are adjustable in position in the lateral direction.

3. Apparatus as claimed in claim 1 or 2 including a plurality of gauge plates (6) for setting the guides (22, 23).

**Patentansprüche**

1. Automatische Auftragschweißvorrichtung mit einer festen Anschlagsvorrichtung (21) mit einem Paar von Führungen (22, 23), die so einstellbar sind, daß sie im Abstand und in der Neigung mit den Seiten einer aufzubauenden Nut (2) übereinstimmen, und mit einem Schaltkasten (15), der zur seitlichen und vertikalen Bewegung mit dem Schweißbrenner (4) der Vorrichtung verbunden ist, welcher Schaltkasten (15) Endschalter (16, 17) zur Umkehrung der seitlichen Bewegung des Schweißbrenners (4) und einen Schwenkhebel (18) aufweist zur Betätigung der Endschalter (16, 17), wenn der Hebel (18) an den Führungen (22, 23) anschlägt.

2. Vorrichtung nach Anspruch 1, dadurch **gekennzeichnet**, daß die Position der Führungen (22, 23) in seitlicher Richtung einstellbar ist.

3. Vorrichtung nach Anspruch 1 oder 2, mit einer Mehrzahl von Plattenlehren (6) zur Einstellung der Führungen (22, 23).

**Revendications**

1. Dispositif automatique de soudage par rechargement comprenant un premier dispositif d'impact fixe (21) avec une paire de guidages (22, 23) réglables pour correspondre en espacement et en inclinaison aux côtés d'une gorge (2) à recharger, un coffret à commutateur (15) accouplé au chalumeau de soudage (4) du dispositif pour le mouvement latéral et vertical, le coffret de commutateur (15) ayant des contacts de fin de course (16, 17) pour inverser le mouvement latéral du chalumeau (4) et un levier de basculement (18) pour l'actionnement des contacts de fin de course (16, 17) lorsque le levier (18) vient en contact avec les guidages (22, 23).

2. Dispositif selon la revendication 1, dans lequel les guidages (22,23) sont réglables en position dans la direction latérale.

3. Dispositif selon les revendications 1 ou 2, comprenant plusieurs gabarits de calibrage (6) pour positionner les guidages (22, 23).

# F I G.1

# F I G.2

# F I G.3

EP 0 366 218 B1

# F I G.4

# F I G.5

# F I G.6

5